(19) Europäisches Patentamt / European Patent Office / Office européen des brevets

(11) **EP 3 882 566 A1**

(12) **EUROPEAN PATENT APPLICATION**
published in accordance with Art. 153(4) EPC

(43) Date of publication:
**22.09.2021 Bulletin 2021/38**

(51) Int Cl.:
**G01B 11/00** (2006.01)

(21) Application number: **18940151.6**

(22) Date of filing: **16.11.2018**

(86) International application number:
**PCT/CN2018/116042**

(87) International publication number:
**WO 2020/097941 (22.05.2020 Gazette 2020/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Wintech Digital Systems Technology Corporation**
**Beijing 100084 (CN)**

(72) Inventors:
• **WU, Jun**
  **Beijing 100084 (CN)**
• **LI, Wenjing**
  **Beijing 100084 (CN)**
• **DONG, Yonghong**
  **Beijing 100084 (CN)**

(74) Representative: **Hofmann, Matthias**
**Boehmert & Boehmert**
**Anwaltspartnerschaft mbB**
**Pettenkoferstraße 22**
**80336 München (DE)**

(54) **OPTICAL ENGINE USED FOR THREE-DIMENSIONAL DETECTION AND THREE-DIMENSIONAL DETECTION DEVICE**

(57)     An optical engine for 3D detection and a 3D detection device. The optical engine comprises a light source, a lighting optical system, a DMD light modulator, a projection imaging system and a projection plane which are sequentially arranged along a light path. Light emitted by the light source is collimated, diverted or converged to be uniformly irradiated onto the DMD light modulator, and a beam modulated by the DMD light modulator is projected by the projection imaging system onto the projection plane. The optical engine is small in size and can realize tilted scanning.

FIG. 1

EP 3 882 566 A1

## Description

## Technical Field

The embodiments of the invention relate to the field of 3D detection devices, and particularly relate to an optical engine for 3D detection.

## Description of Related Art

3D detection, as a technique for measuring 3D dimensions of products, is mainly used for scanning the spatial shape and structure of objects to obtain spatial coordinates of the surface of the objects, and is of great significance in converting 3D information of entities into digital signals that can be directly processed by computers, thus providing a convenient and fast mean for realizing digitization of the entities. The 3D detection technique can realize non-contact measurement and has the advantages of being high in speed and precision, and measurement results can be directly input to different software interfaces, so the 3D detection technique becomes very popular today, with the increasing popularization of the techniques such as CAD, CAM and CIMS.

The 3D laser detection instrument, as a 3D detection device, is featured by high precision, low environmental requirements, non-contact detection, and the like, and has developed rapidly in recent years. The key part of the 3D laser detection instrument is the optical engine, and the most critical part of the optical engine is the DMD (Digital Micromirror Device) light modulator, wherein the DMD is a digital image chip which is exclusive to and developed by Texas Instruments (TI), integrates with a circuit unit of a micro-electro-mechanical structure and is formed by a memory unit such as COMS or SRAM. When the DMD operates normally, light is irradiated onto the DMD by an optical component and is reflected by a plurality of lenses distributed over the surface of the DMD, having tiny volumes and may rotate under controlled of a circuit, and finally, a desired image may be projected through the collaboration of a lighting optical system and a projection imaging system.

Optical engines for 3D detection on the present market are large in size; and the optical engines are parallel to the projection plane in space, so when a 3D detection device adopts two or more optical engines, it is impossible to realize an effective spatial arrangement of the optical engines.

## Brief Summary of the Invention

In a first aspect, the invention provides an optical engine for 3D detection, comprising: a light source for emitting a beam; a DMD light modulator for modulating the digital pulse width of an incident beam; a lighting optical system for uniformly irradiating a beam onto the DMD light modulator; and a projection imaging system for receiving a reflective beam from the DMD light modulator and projecting the reflective beam onto a projection plane; wherein, a small angle $\alpha$ exits between the DMD light modulator and an emergent surface of the lighting optical system, such that a light path structure constituted by an equivalent DMD light modulator, a lens locating plane of the projection imaging system, and the projection plane meets the Scheimpflug principle.

In one embodiment, the light source is a blue LED.

In one embodiment, the optical engine further comprises a collimating lens group for converting a divergent beam emitted by the light source into a parallel beam.

In one embodiment, the optical engine further comprises a diversion device for diverting the parallel beam. The diversion device comprises a micro-lens array, a reflector and a relay lens.

In one embodiment, the lighting optical system comprises an RTIR prism.

In a second aspect, the invention provides a 3D detection device comprising at least one optical engine mentioned in the first aspect.

The optical engine provided by the embodiments of the invention has the beneficial effects of being small in size, capable of realizing tilted scanning, and the like.

## Brief Description of the Several Views of the Drawings

To gain a better understanding of the technical solutions and advantages of the embodiments of the application, illustrative embodiments of the application will be explained in further detail below in conjunction with accompanying drawings. Obviously, the embodiments in the following description are merely illustrative ones, and are not all possible ones of the embodiments of the application.

FIG. 1 is a schematic diagram of an optical engine for 3D detection according to an embodiment of the invention.
FIG. 2 is an equivalent schematic diagram of the optical engine for 3D detection meeting the Scheimpflug principle.

## Detailed Description of the Invention

The technical solutions of the invention will be described in further detail below with reference to the accompanying drawings and embodiments.

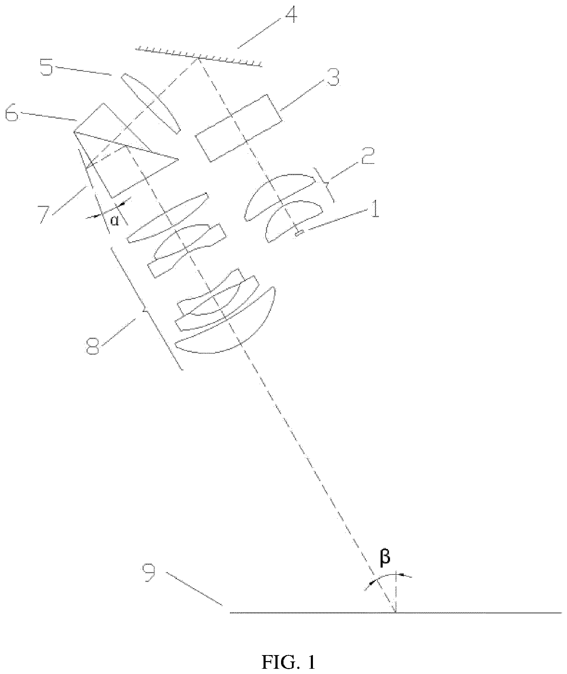

FIG. 1 is a schematic diagram of an optical engine for 3D detection according to an embodiment of the invention. As shown in FIG. 1, the optical engine comprises a blue LED 1, a collimating lens group 2, a micro-lens array 3, a reflector 4, a relay lens 5, an RTIR prism 6, a DMD light modulator 7 and a projection imaging system 8.

The central wavelength of a beam emitted by the blue LED 1 is, such as, 460nm, and the luminous power of the blue LED 1 is, such as, 5.5w. After passing through the collimating lens group 2, the blue divergent beam is converted into a blue parallel beam. The blue LED can provide a high power for the optical engine. Of course, the blue LED can also be replaced with other light sources, such as a white LED.

The blue parallel beam then passes through the micro-lens array 3 and is converged by the micro-lens array 3.

The beam converged by the micro-lens array 3 reaches the reflector 4 and is diverted by the reflector 4. The reflector 4 can change the direction of the light path, thus compressing the space of the optical engine and reducing the size of the optical engine.

After being diverted by the reflector 4, the beam reaches the relay lens 5 and is converged by the relay lens 5.

Of course, in addition to the micro-lens array 3, the reflector 4 and the relay lens 5, other light homogenizing and/or diversion devices can also be used to collimate, converge and/or divert the beam.

After being further converged, the beam is uniformly irradiated onto the DMD light modulator 7 through the RTIR (Reflected Total Internal Reflection) prism 6, and the beam is reflected by the DMD light modulator and enters the RTIR prism again. The RTIR prism has a surface approximate to the critical angle of total reflection, a beam at a certain angle will be internally reflected totally on this surface, and beams at other angles will pass through this surface. Specifically, when reaching the hypotenuse of the right-angled prism, namely the RTIR prism 6, the beam entering the RTIR prism 6 from the lens 5 will completely penetrate through the hypotenuse of the right-angled prism and then enter the DMD light modulator 7, and then the beam will be reflected by the DMD light modulator 7 and will be totally reflected when passing through the hypotenuse of the right-angled prism again. By means of the RTIR prism, an incident irradiation beam is separated from an emergent imaging beam. The beam from the RTIR prism 6 will enter the projection imaging system 8.

Of course, the RTIR prism can be replaced with other prisms such as a TIR prism. The RTIR prism has the advantage of being capable of eliminating the influence of a gap between glued surfaces of two prisms on the quality of an image on a projection plane 9.

The operation of the DMD light modulator 7 mainly relies on different signals transmitted by a backend circuit to a CMOS chip to control the rotation position of each micro-lens on the chip, such that light irradiated onto the micro-lenses can be selectively reflected in different directions, thus modulating the digital pulse width of the beam.

A small angle $\alpha$ is reserved between the DMD light modulator 7 and the RTIR prism 6 for the purpose of making the light path structure meet the Scheimpflug principle.

Finally, an image on the DMD light modulator 7 is projected by the projection imaging system 8 onto the projection plane 10. The projection imaging system 8 may include a plurality of optical lenses and is used for projecting the image on the DMD light modulator 7 onto the projection plane 9 according to a certain magnification factor, wherein an angle formed between the optical axis of the projection imaging system 8 and the normal of the projection plane 9 is $\beta$, such that tilted scanning can be realized.

The distance from a DMD light modulator 7' to a principal surface of the projection imaging system 8 is set as t, the distance from the projection plane 9 to the principal surface of the projection imaging system 8 is set as d, and the focal length of the projection imaging system 8 is set as f. The object-image relation is:

$$1/t+1/d=1/f \qquad \text{①}$$

The relation obtained according to the geometrical relationship in the schematic diagram is:

$$t/\tan\alpha=d/\tan\beta \qquad \text{②}$$

By combining the relation ① and the relation ②, t will be cancelled out to obtain the relation between $\alpha$ and $\beta$:

$$\alpha = atan[f * tan\beta / （d-f）]$$

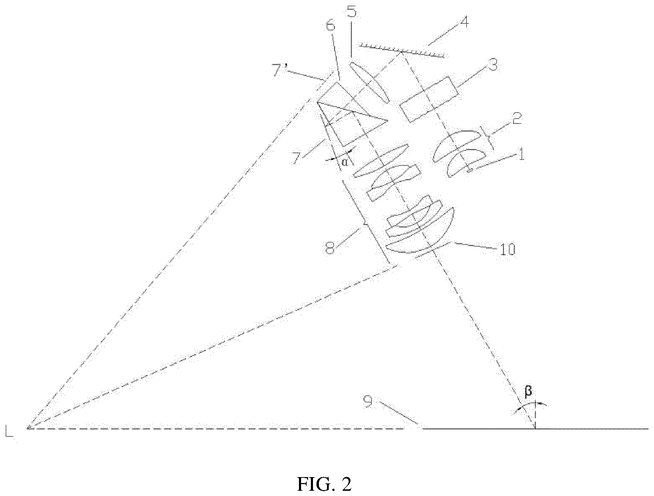

In one example, as shown in FIG. 2, the angle formed between the optical axis of the projection imaging system and the normal of the projection plane is β=30°, the focal length of the projection imaging system 8 is f=17.94mm, the distance from the projection plane 9 to the principal surface of the projection imaging system 8 is d=133.09mm, and correspondingly, the angle between the DMD light modulator and the RTIR prism is α=5.14°. Finally, the plane defined by the equivalent DMD light modulator 7' formed by the beam reflected by the RTIR prism, a lens locating plane 10 and the projection plane 9 intersect at a line L, and the light path structure constituted by the equivalent DMD light modulator 7', the lens locating plane 10 and the projection plane 9 meets the Scheimpflug principle. Because the beam from the equivalent DMD light modulator 7' is focused on the projection plane, an image obtained based on the projection plane is comprehensive and clear.

By adoption of a diversion device, the size of the optical engine in the embodiments of the invention is greatly reduced. In one example, the size of the optical engine is, such as, 105mm*80mm*55mm.

By applying the optical engine to a 3D detection device, a clear spatial image of the surface of an object can be obtained.

In one embodiment, a rotating device is arranged in the 3D detection device to enable the object to rotate at the junction of the projection plane and an extension line of the light path, such that a 3D image of the surface of the object can be obtained.

In another embodiment, two optical engines are arranged in the 3D detection device and are laterally symmetrical with respect to the normal of the projection plane, such that a 3D image of a considerable part of the surface of the object can be directly obtained. Of course, a 3D image of the whole surface of the object can be obtained by means of the rotating device. Because an angle exists between the optical engines and the projection plane, an effective spatial arrangement of the optical engines in the 3D detection device can be realized.

3D detection based on the rotation of the object has been described above. Different sides of the object can also be scanned by rotating the optical engine, so as to obtain an actual shape of the object.

It should be finally noted that the above embodiments are merely used to explain the technical solutions of the invention, and are not intended to limit the invention. Although the invention has been described in detail with reference to the preferred embodiments, those ordinarily skilled in the art would appreciate that modifications or equivalent substitutions can be made to the technical solutions of the invention without departing from the spirit and scope of the technical solutions of the invention.

## Claims

1. An optical engine for 3D detection, comprising:

   a light source (1) for emitting a beam;
   a DMD light modulator (7) for modulating a digital pulse width of an incident beam;
   a lighting optical system (6) for uniformly irradiating a beam onto the DMD light modulator (7); and
   a projection imaging system (8) for receiving an emergent beam from the DMD light modulator (7) and projecting the emergent beam onto a projection plane (9);
   wherein, a small angle (α) exists between the DMD light modulator (7) and an emergence surface of the lighting optical system, such that a light path structure constituted by an equivalent DMD light modulator (7'), a lens locating plane (10) of the projection imaging system, and the projection plane (9) meets a Scheimpflug principle.

2. The optical engine for 3D detection according to Claim 1, wherein the light source (1) is a blue LED.

3. The optical engine for 3D detection according to Claim 1, further comprising a collimating lens group (2) for converting a divergent beam emitted by the light source (1) into a parallel beam.

4. The optical engine for 3D detection according to Claim 1, further comprising a diversion device (3, 4, 5) for diverting the beam.

5. The optical engine for 3D detection according to Claim 4, wherein the diversion device comprises a micro-lens array (3), a reflector (4) and a relay lens (5), wherein the micro-lens array is used for converging the beam onto the reflector, and the relay lens is used for converging the beam from the reflector.

**6.** The optical engine for 3D detection according to Claim 1, wherein the lighting optical system comprises an RTIR prism (6) allowing the beam to pass through to be irradiated onto the DMD light modulator and enabling the emergent beam from the DMD light modulator to be separated from the incident beam.

**7.** A 3D detection device, comprising at least one optical engine according to any one of Claims 1-6.

FIG. 1

FIG. 2

<table>
<tr><td colspan="2"><b>INTERNATIONAL SEARCH REPORT</b></td><td colspan="2">International application No.<br><b>PCT/CN2018/116042</b></td></tr>
</table>

**A.    CLASSIFICATION OF SUBJECT MATTER**

    G01B 11/00(2006.01)i

According to International Patent Classification (IPC) or to both national classification and IPC

**B.    FIELDS SEARCHED**

Minimum documentation searched (classification system followed by classification symbols)

    G01, G02B

Documentation searched other than minimum documentation to the extent that such documents are included in the fields searched

Electronic data base consulted during the international search (name of data base and, where practicable, search terms used)

    CNABS, CNTXT, VEN, CJFD: 三维, 3D, 检测, 测量, DMD, 夹角, 角度, 成像, 投影, 沙姆, 反射式全内反射, PTIR, TIR, three, dimension+, measur+, angle

**C.    DOCUMENTS CONSIDERED TO BE RELEVANT**

| Category* | Citation of document, with indication, where appropriate, of the relevant passages | Relevant to claim No. |
|---|---|---|
| A | CN 105698707 A (SHANGHAI AEROSPACE POWER TECHNOLOGY ENGINEERING CO., LTD.) 22 June 2016 (2016-06-22)<br>    entire document | 1-7 |
| A | CN 106443691 A (XI'AN JIAOTONG UNIVERSITY) 22 February 2017 (2017-02-22)<br>    entire document | 1-7 |
| A | CN 106568395 A (SOUTHWEST UNIVERSITY OF SCIENCE AND TECHNOLOGY) 19 April 2017 (2017-04-19)<br>    entire document | 1-7 |
| A | CN 107607040 A (TIANJIN UNIVERSITY) 19 January 2018 (2018-01-19)<br>    entire document | 1-7 |

☐ Further documents are listed in the continuation of Box C.        ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 August 2019** | **12 August 2019** |

| Name and mailing address of the ISA/CN | Authorized officer |
|---|---|
| **State Intellectual Property Office of the P. R. China**<br>**No. 6, Xitucheng Road, Jimenqiao Haidian District, Beijing**<br>**100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/116042**

| Patent document cited in search report | | | Publication date (day/month/year) | Patent family member(s) | | | Publication date (day/month/year) |
|---|---|---|---|---|---|---|---|
| CN | 105698707 | A | 22 June 2016 | CN | 105698707 | B | 31 August 2018 |
| CN | 106443691 | A | 22 February 2017 | None | | | |
| CN | 106568395 | A | 19 April 2017 | None | | | |
| CN | 107607040 | A | 19 January 2018 | None | | | |

Form PCT/ISA/210 (patent family annex) (January 2015)